# EUROPEAN PATENT APPLICATION

(11) **EP 2 878 457 A1**
(43) Date of publication of application: **03.06.2015**
(21) Application number: 13823256.6
(22) Date of filing: 23.07.2013
(51) Int. Cl.: B60C 5/14, B32B 25/08

(54) **LAMINATE FOR INNER LINER, AND TYRE USING SAME**

(30) Priority: 27.07.2012 JP 2012166917
(71) Applicant: Bridgestone Corporation, Tokyo 104-8340 (JP)
(72) Inventor: KITANO Hideki, Kodaira-shi Tokyo 187-0031 (JP); CHIASHI Hideyuki, Kodaira-shi Tokyo 187-0031 (JP)
(74) Representative: Oxley, Robin John George
(86) International application number: PCT/JP2013/069919
(87) International publication number: WO 2014/017486

(57) **Abstract**

Provided is a laminate for inner liner which uses a resin film in which adhesiveness between an adjacent member such as a carcass and a resin film can be sufficiently secured and a tire using the same. The laminate is a laminate for inner liner including: a gas barrier layer 1 comprising a resin material which is composed of a thermoplastic resin or a mixture of a thermoplastic resin and a thermoplastic elastomer; and rubber layers 2A, 2B each arranged on each of both sides of the gas barrier layer. The rubber layer contains at least a diene elastomer, the diene elastomer is modified by a compound including a functional group having an affinity for the resin material, and at least one of the rubber layers contains a cross-linking agent.

## Description

### TECHNICAL FIELD

The present invention relates to a laminate for inner liner (hereinafter, also simply referred to as a "laminate") and a tire using the same, and particularly to a laminate for inner liner using a resin material and improvement of a tire using the same.

### BACKGROUND ART

A rubber composition comprising butyl rubber, halogenated butyl rubber, or the like as a main raw material is conventionally used for an inner liner which is arranged on the tire inside surface as an air barrier layer for maintaining the internal pressure of a tire. However, since such a rubber composition comprising butyl based rubber as a main raw material has low gas barrier properties, when such a rubber composition is used as an inner liner, the inner liner needs to be thick to some extent, which has been an obstacle for making a tire light-weight.

On the other hand, there is a technique of using a resin film in place of a sheet made of butyl based rubber as an inner liner. However, in the case of using a resin film, since adhesiveness with an adjacent carcass member is not sufficient, an additional adhesive layer needs to be provided. For example, Patent Document 1 discloses a technique of securing adhesiveness with an adjacent rubber layer by providing adhesive layers made of an adhesive resin on both sides of a gas barrier layer made of a resin. However, although an adhesive layer made of a resin can sufficiently secure adhesiveness with a gas barrier layer, adhesion with an adjacent rubber layer is not sufficient and an inner liner may be displaced during molding and vulcanization, which leaves room for improvement.

### RELATED ART DOCUMENT

### PATENT DOCUMENT

Patent Document 1: Japanese Unexamined Patent Application Publication No. H09-19987

### SUMMARY OF THE INVENTION

### PROBLEMS TO BE SOLVED BY THE INVENTION

As mentioned above, from the viewpoint of light-weight of a tire, establishment of a technique for sufficiently securing adhesiveness between an adjacent member such as a carcass and a resin film when using a resin film for an inner liner has been desired.

Accordingly, an object of the present invention is to resolve the above-mentioned problems and to provide a laminate for inner liner which uses a resin film in which adhesiveness between an adjacent member such as a carcass and a resin film can be sufficiently secured and a tire using the same.

### MEANS FOR SOLVING THE PROBLEMS

The present inventors intensively studied to find that the above-mentioned problems can be solved by using as an inner liner a laminate formed by arranging rubber layers composed of a predetermined formulation on both sides of a gas barrier layer made of a resin material, thereby completing the present invention.

Specifically, the laminate for inner liner of the present invention is a laminate for inner liner comprising: a gas barrier layer comprising a resin material which is composed of a thermoplastic resin or a mixture of a thermoplastic resin and a thermoplastic elastomer; and rubber layers each arranged on each of both sides of the gas barrier layer, wherein
the rubber layer contains at least a diene elastomer, the diene elastomer is modified by a compound including a functional group having an affinity for the resin material, and at least one of the rubber layers contains a cross-linking agent.

In the present invention, preferably, the compound comprises any of oxygen, nitrogen, and silicon, and also preferably, the functional group is selected from an epoxy group, a maleic anhydride group, an amino group, a carboxylic acid group, and a silicon-containing functional group. In the present invention, preferably, the resin material is made of ethylene-vinyl alcohol copolymer (EVOH). Further, in the present invention, preferably, the diene elastomer contains natural rubber. Still further, in the present invention, preferably, of the rubber layers, the layer which is positioned on the tire inside surface when the rubber layers are arranged on the tire inside surface contains a cross-linking agent.

Still further, in the present invention, the rubber layers may be composed of a similar rubber composition or different rubber compositions. Still further, in the present invention, tack values of the rubber layers measured by a probe tack test in accordance with JIS Z0237 are the same, or the value of the layer which is positioned on the side of the tire inside surface when arranged on the tire inside surface is smaller. Still further, in the present invention, preferably, the cross-linking agent is sulfur or peroxide, and more preferably, the cross-linking agent is sulfur. Still further, in the present invention, the thickness of each of the rubber layers is suitably in the range of 1 to 1000 µm, more suitably 1 to 500 µm, and further suitably 5 to 200 µm.

The tire of the present invention is a tire using the laminate for inner liner of the above-mentioned present invention.

### EFFECTS OF THE INVENTION

According to the present invention, by employing the above-mentioned constitution, a laminate for inner liner in which adhesiveness between an adjacent member such as a carcass and a resin film can be sufficiently secured can be attained, and a joining portion (splicing portion) of the inner liner can be strongly adhered. This has been made possible to obtain a tire which satisfies demand for light-weight and at the same time has a sufficient durability.

### BRIEF DESCRIPTION OF THE DRAWINGS

Fig. 1 is a schematic sectional view illustrating one example of a laminate for inner liner of the present invention.
Fig. 2 is a half sectional view in the width direction illustrating one example of a tire of the present invention.

### MODE FOR CARRYING OUT THE INVENTION

Embodiments of the present invention will be described in detail.

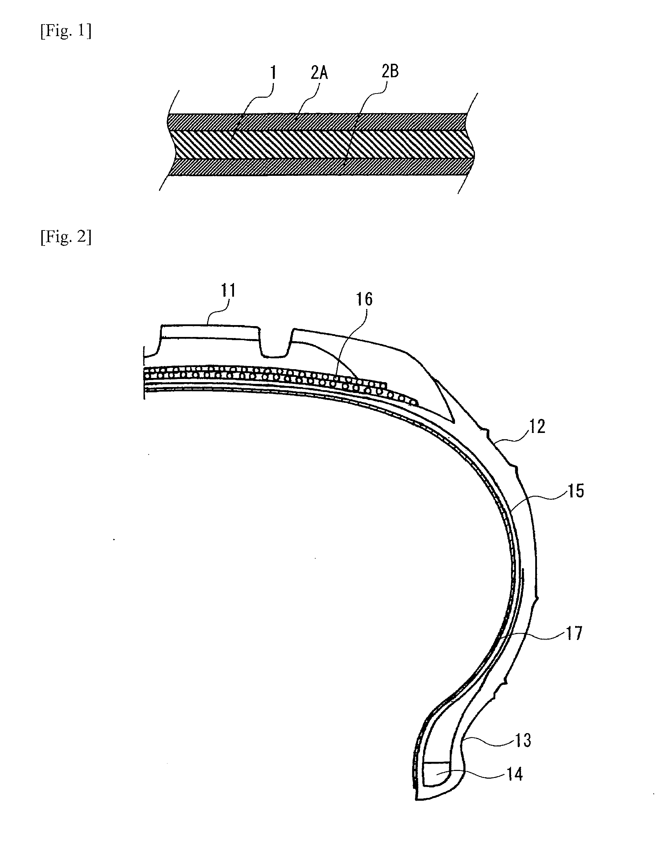

Fig. 1 illustrates a schematic sectional view of a laminate for inner liner of the present invention. As illustrated, the laminate for inner liner of the present invention is composed of a gas barrier layer 1 and rubber layers 2A, 2B which are arranged on both sides of the gas barrier layer.

In the present invention, it is important that a gas barrier layer 1 comprises a resin material which is composed of a thermoplastic resin or a mixture of a thermoplastic resin and a thermoplastic elastomer, and that the rubber layers 2A, 2B at least contain a diene elastomer which is modified by a compound including a functional group having an affinity for the resin material, and at least one of the rubber layers 2A, 2B contains a cross-linking agent. In other words, by securing gas barrier properties needed for an inner liner by a gas barrier layer 1 made of a resin material, and at the same time, by arranging rubber layers 2A, 2B containing the above-mentioned specific diene elastomer on both sides of the gas barrier layer as adhesive layers, it becomes possible to preferably secure adhesion with both the gas barrier layer 1 and a carcass layer. A failure such as displacement of an inner liner during molding and vulcanization therefore does not occur by using such a laminate, thereby obtaining a tire in which light-weight is attained and the durability is excellent.

Specifically, in the present invention, when the rubber layers 2A, 2B contain a diene elastomer which is modified by a compound including a functional group having an affinity for a resin material which constitutes the gas barrier layer 1, adhesiveness between the rubber layers 2A, 2B and the gas barrier layer 1 can be secured. On the other hand, since the diene elastomer contained in the rubber layers 2A, 2B is co-crosslinked with a coating rubber which constitutes a carcass layer, in the present invention, adhesiveness between the rubber layers 2A, 2B and the carcass layer can also be secured.

In the present invention, since the rubber layers 2A, 2B are arranged on both sides of the gas barrier layer 1, the rubber layers are in contact with each other at an overlapping portion which is generated when an inner liner is wound in the tire circumferential direction at the time of tire molding, thereby attaining a further strong adhesion. When both sides of the gas barrier layer 1 are covered with the rubber layers 2A, 2B, the gas barrier layer 1 is not directly exposed to air, thereby also obtaining an effect of inhibiting moisture absorption of the gas barrier layer 1. Deterioration of the gas barrier layer 1 due to sunlight can also be inhibited.

The gas barrier layer 1 is constituted by a film or a sheet composed of a resin material. Specific examples of such a resin material include a thermoplastic resin such as a polyamide resin, a polyvinylidene chloride resin, a polyester resin, an ethylene-vinyl alcohol copolymer (EVOH) resin or a mixture of the above mentioned thermoplastic resins and a thermoplastic elastomer. In particular, a resin material having an oxygen permeation coefficient at 20°C, 65%RH of smaller than 7.0 × 10⁻¹⁰ cm³•cm/cm²•sec•cmHg are preferred since such a resin material has excellent gas barrier properties. In the present invention, among the above, a film or a sheet made of a modified or unmodified EVOH resin can be suitably used as the gas barrier layer 1. Such a film or sheet can be manufactured by extrusion molding or the like.

Here, the ethylene content of the EVOH needs to be 25 to 50 mol%. In order to obtain a favorable bending resistance and fatigue resistance, the lower limit of the ethylene content of the EVOH is suitably 30 mol% or larger, and more suitably 35 mol% or larger. In order to obtain favorable gas barrier properties, the upper limit of the ethylene content of the EVOH is 48 mol% or smaller, and more suitably 45 mol% or smaller. When the ethylene content of the EVOH is smaller than 25 mol%, bending resistance, fatigue resistance, and melt-moldability may deteriorate; when the ethylene content is larger than 50 mol%, desired gas barrier properties may not be obtained.

The saponification degree of the EVOH is preferably 90% or higher, more preferably 95% or higher, further preferably 98% or higher, and most preferably 99% or higher. When the saponification degree of the EVOH is smaller than 90%, the gas barrier properties and the thermal stability when an inner liner is formed may be insufficient.

Further, the melt flow rate (MFR) of the EVOH at 190°C under a load of 2160 g is preferably 0.1 to 30 g/10 min., and more preferably 0.3 to 25g/10 min. In particular, for an EVOH having a melting point of about 190°C or a melting point of 190°C or higher, the MFR thereof was measured under a load of 2160 g at a temperature of the melting point or higher. In a semilog graph, the measured MFR is plotted by setting the reciprocal of the absolute temperature to the lateral axis and setting the logarithm of the MFR to the vertical axis to obtain a value by extrapolation to 190°C, and an EVOH in which the obtained value is in the above-mentioned range is considered to be a suitable EVOH.

The thickness of the gas barrier layer 1 is preferably in a range of 1 to 500 µm, and particularly in a range of 5 to 200 µm. When the thickness of the gas barrier layer 1 is too small, sufficient gas barrier properties may not be obtained. On the other hand, when the thickness of the gas barrier layer 1 is too large, light-weight of a tire is inhibited, and at the same time, bending resistance and fatigue resistance of the gas barrier layer 1 are deteriorated, whereby a rupture and crack are likely to occur due to bending deformation. Since the generated crack is likely to extend, the internal pressure retaining properties may be compromised when the gas barrier layer is incorporated in a tire and the tire is allowed to travel.

The gas barrier layer 1 is not limited to be composed of one film or sheet, and may be composed of a laminated film or laminated sheet having a multilayer structure composed of two or more, suitably 10 or more, for example, 7 to 2050 films or sheets. In this case, the laminated film or laminated sheet is not limited to a film or sheet composed of the same resin material and may be film or sheet composed of different resin materials as long as the adhesion between laminated layers is secured, and specifically, the laminated film or laminated sheet may be a film or sheet composed of different thermoplastic resins, and in particular, may be those obtained by laminating films or sheets composed of a thermoplastic elastomer.

The rubber layers 2A, 2B at least contain a diene elastomer which is modified by a compound containing a functional group having an affinity for a resin material which constitutes the gas barrier layer 1. Examples of such a compound include those including any of oxygen, nitrogen, and silicon. Specific examples of the functional group include a silicon-containing functional group such as an epoxy group, a maleic anhydride group, an amino group, a carboxylic acid group, and a silane group.

Specific examples of the diene elastomer include natural rubber (NR), isoprene rubber (IR), butadiene rubber (BR), styrene-butadiene copolymer rubber (SBR), acrylonitrile-butadiene rubber (NBR), and chloroprene rubber (CR). As the diene elastomer, NR, BR, and SBR are preferred among the above, and more preferably, at least NR is contained in the rubber layers. These diene elastomers may be used singly, or two or more of these may be used in combination. In the present invention, particularly, natural rubber modified by an epoxy group is preferably used for the rubber layers.

At least one of the rubber layers 2A, 2B needs to contain a cross-linking agent, which makes it possible to cure the rubber layers by vulcanization. Preferably, by adding a cross-linking agent to the layer of the rubber layers 2A, 2B which is the layer which is positioned on the side of the tire inside surface when an inner liner is arranged on the tire inside surface, or the layer which is in contact with a bladder during vulcanization, adhesion between a rubber layer and a bladder can be prevented even when the inner liner is in contact with the bladder during vulcanization. For such a cross-linking agent, from the viewpoint of adjusting the crosslinking rate and the modulus of elasticity, peroxide or sulfur can be used. In particular, in the present invention, sulfur is preferably used from the viewpoint of co-crosslinking. Isocyanate is also preferably used as the cross-linking agent. By adding isocyanate into the rubber layer to crosslink the rubber layer to a small degree, an effect of preventing adhesion with a bladder can be obtained. Isocyanates can be divided into four types: (1) adduct-type, (2) biuret-type, (3) prepolymer-type, and (4) isocyanurate type, any of which can be used in the present invention.

Further, other than a cross-linking agent, a crosslinking accelerator or a crosslinking acceleration aid can also be added to the rubber layers 2A, 2B. Examples of the crosslinking accelerator include diphenylguanidine (DPG), tetramethyl thiuram disulfide (TMTD), tetramethyl thiuram monosulfide (TMTM), 2-mercaptobenzothiazole zinc salt (ZnBDC), 2-mercaptobenzothiazole (MBT), 2-benzothiazolyl disulfide (MBTS), N-cyclohexyl-2-benzothiazol sulfenamide (CBS), and N-t-butyl-2-benzothiazol sulfenamide (BBS). Examples of the crosslinking acceleration aid include zinc flower (zinc oxide).

Still further, the rubber layers 2A, 2B can contain a filler. Examples of the filler include carbon black and silica. In particular, by adding carbon black into the rubber layer which is positioned on the tire inside surface side when an inner liner is arranged on the tire inside surface, a ultraviolet degradation such as hydrolysis of the outermost surface of a gas barrier layer can be inhibited, and therefore, addition of carbon black is also effective for long-term storage. In the present invention, the rubber layers 2A, 2B may be composed of a similar rubber composition or different rubber compositions.

Still further, in the present invention, preferably, the tack values of the rubber layers 2A, 2B measured by a probe tack test in accordance with JIS Z0237 are the same, or the tack value of the layer which is positioned on the side of the tire inside surface when arranged on the tire inside surface is smaller. This is for the purpose of preventing the rubber layer from being peeled by adhesion to a bladder or the like during tire molding.

Each thickness of the rubber layers 2A, 2B is preferably in a range of 1 to 1000 µm, particularly preferably 1 to 500 µm, further preferably 5 to 400 µm, and still further preferably 5 to 200 µm. When the thickness of the rubber layer is too small, a sufficient adhesion is not attained, and working of the rubber layer becomes complicated. On the other hand, when the thickness of the rubber layer is too large, the weight of a tire becomes large. Both of the above cases are therefore not preferred.

A laminate for inner liner of the present invention can be easily provided in manufacturing of a tire by winding the rubber layer 2A, gas barrier layer 1, and rubber layer 2B around a roll by layering the layers in sequence in a state in which the layers are protected by at least one release sheet, then taking the layers out from the roll, and cutting the layers in a desired length. For the release sheet which is used in this case, a general-purpose one can be used, and not particularly restricted. Specific examples thereof include a polyethylene terephthalate (PET) film for mold release as well as a polyethylene (PE) sheet or a cotton sheet. The laminate cut in a desired length can be provided in manufacturing of a tire: by winding the laminate on a tire molding drum in a cylindrical shape and then overlapping the ends thereof to be joined; or by forming the laminate in a cylindrical shape having a needed size and then arranging the laminate on a tire molding drum. The laminate cut in a desired length can be layered on another rubber sheet and then also provided on a tire molding drum.

Fig. 2 illustrates a half sectional view of one example of a tire of the present invention in the width direction. The illustrated tire comprises a tread portion 11 and a pair of side wall portions 12 and bead portions 13 which are continued from both sides of the tread portion, and comprises as a skeleton a carcass 15 composed of a carcass ply which extends toroidally between bead cores 14 embedded in a pair of bead portions 13 and which reinforces each portion. A belt layer 16 composed of two belts is arranged on a crown portion of the carcass 15 outside in the tire radius direction, and an inner liner 17 is arranged on a tire inside surface which is inside the carcass 15.

In a tire of the present invention, it is important that the above-mentioned laminate of the present invention is used for the inner liner 17, which makes it possible to obtain a tire in which light-weight is attained without a problem such as displacement of an inner liner. In a tire of the present invention, constitutions other than the inner liner can be appropriately set in accordance with a usual method, and not particularly restricted.

### EXAMPLES

The present invention will now be described in detail with reference to Examples.

### <Example 1>

First, in a pressurized reaction vessel, 2 parts by mass of ethylene-vinyl alcohol copolymer (EVOH) (MFR: 5.5 g/10 min. at 190°C under a load of 2160 g) having an ethylene content of 44 mol% and a saponification degree of 99.9% and 8 parts by mass of N-methyl-2-pyrrolidone were prepared and the mixture was heated and stirred at 120°C for 2 hours to completely dissolve the EVOH. To the mixture, 0.4 parts by mass of epoxy propane as an epoxy compound was added and then heated at 160°C for 4 hours. After heating, the mixture was precipitated in 100 parts by mass of distilled water, and then N-methyl-2-pyrrolidone and unreacted epoxy propane were sufficiently washed away with a large amount of distilled water to obtain a modified EVOH.

Further, the obtained modified EVOH was crushed by a crusher into small particles with a size of about 2 mm, and again washed with a large amount of distilled water. The particles after washing were vacuum dried at room temperature for eight hours, and then allowed to melt at 200°C by using a twin screw extruder to be pelletized. The Young's modulus of the obtained modified EVOH at 23°C was 1300 MPa. Here, the Young's modulus of the modified EVOH at 23°C was measured by the following method.

### (Measurement of Young's modulus at 23°C)

By using the obtained pellet, film making was performed in the following extrusion conditions by using a twin screw extruder manufactured by Toyo Seiki Seisaku-sho, LTD. to manufacture a single-layer film having a thickness of 20 µm. Next, by using this film, a strip-shaped test piece having a width of 15 mm was manufactured and the test piece was left to stand for one week in a thermostatic chamber under conditions of 23°C and 50%RH, and then an S-S curve (stress-strain curve) at 23°C and 50%RH was measured in conditions of a chuck interval of 50 mm and a drawing rate of 50 mm/min by using Autograph [AG-A500 type] manufactured by Shimadzu Corporation to calculate the Young's modulus using the initial inclination of the S-S curve.
Screw: 20 mmϕ, full flight
Cylinder, die temperature setting: C1/C2/C3/die = 200/200/200/200(°C)

The ethylene content and saponification degree of the EVOH are values calculated form a spectrum obtained by ¹H-NMR measurement (using "JNM-GX-500 type" manufactured by JEOL Ltd.) using deuterated dimethylsulfoxide as a solvent. The melt flow rate (MFR) of EVOH was determined by the amount per unit time (g/10 min.) of a resin extruded from an orifice having a diameter of 2.1 mm provided at the center of a cylinder when the cylinder having inner diameter of 9.55 mm and a length of 162 mm of MELT INDEXER L244 (manufactured by Takara Kogyo K. K.) was filled with a sample and the sample was allowed to melt at 190°C and then a load was uniformly applied by using a plunger having a weight of 2160g and a diameter of 9.48 mm. It is noted that, for an EVOH having a melting point of about 190°C or higher, measurement was conducted under a load of 2160 g at a plurality of temperatures not lower than the melting point to plot the measured MFR in a semilog graph by setting the reciprocal of the absolute temperature to the lateral axis and setting the logarithm of the MFR to the vertical axis and a value calculated by extrapolation to 190°C was defined as the melt flow rate (MFR).

A seven-layer multilayer film (film 1) formed by alternately laminating three layers (2 µm for each layer) of the above-mentioned modified EVOH and four layers (5 µm for each layer) of thermoplastic polyurethane (TPU) (manufactured by KURAMIRON , KURARAY CO., LTD.) was manufactured by co-extrusion. The obtained multilayer film was subjected to electron beam irradiation (acceleration voltage 200kV, irradiation dose 100 kGy) to increase the strength of the film.

A rubber composition (rubber layer 1) containing the epoxy group-modified natural rubber as listed on the Table 1 below was prepared and dissolved in a toluene solution. A tacky adhesive layer (rubber sheet) having a thickness of 50 µm which was a film formed by coating was arranged on each of both sides of the above-mentioned multilayer film to manufacture an inner liner of Example 1.

**[Table 1]**

| Compounding recipe | | Rubber layer compounding ratio (parts by mass) | | | | | | |
|---|---|---|---|---|---|---|---|---|
| | | 1 | 2 | 3 | 4 | 5 | 6 | 7 |
| Modified rubber | Manufactured by RRIM, "ENR25" (epoxy group modified natural rubber , epoxidation rate 25%) | 50 | 80 | 50 | - | 50 | - | 50 |
| Modified rubber | Manufactured by RRIM, "ENR50" (epoxy group-modified natural rubber, epoxidation rate 50%) | 50 | - | 50 | - | 50 | - | 50 |
| Natural rubber | | - | - | - | 70 | - | 100 | - |
| Modified rubber | manufactured by Daicel Corporation, "EPOFRIEND" (epoxy-modified styrene-butadiene copolymer) | - | 20 | - | 30 | - | - | - |
| Carbon Black | manufactured by Tokai Carbon Co., Ltd., "SEAST NB" | 50 | 50 | 50 | 50 | 50 | 50 | 50 |
| Antioxidant | manufactured by Sumitomo Chemical Company, Limited, "Antigen 6C" (N-phenyl-N'-1,3-dimethylbutyl-p-phe nylenediamine) | 1 | 1 | 1 | 1 | 1 | 1 | 1 |
| Stearic acid | | 1 | 1 | 1 | 1 | 1 | 1 | 1 |
| Zinc flower (zinc oxide) | | 3 | 3 | 3 | 3 | 3 | 3 | 3 |
| Tackifier | manufactured by BASF Japan Ltd., "KORESIN" (phenol-based) | 10 | 10 | 0 | 10 | 10 | 10 | 10 |
| Oil | manufactured by Idemitsu Kosan Co.,Ltd., (process oil PW-380) | 5 | 5 | 5 | 5 | 5 | 5 | 5 |
| Isocyanate | manufactured by Sumika Bayer Urethane Co., Ltd., "Desmodur L75" | - | - | - | - | - | - | 15 |
| Vulcanization accelerator CZ | manufactured by OUCHI SHINKO CHEMICAL INDUSTRIAL CO.,LTD, "Nocceler CZ-G" (N-cyclohexyl-2-benzothiazolyl sulfenamide) | 1 | 1 | 1 | 1 | 1 | 1 | 1 |
| Sulfur | | 1 | 1 | 1 | 1 | - | 1 | 1 |
| Tack^{*1} (index) | | 100 | 80 | 90 | 75 | 100 | 70 | 80 |

| | | | | | | | | |
|---|---|---|---|---|---|---|---|---|
| *1) (Method of measuring tack) | | | | | | | | |

A probe tack test was performed in accordance with JIS Z0237 to measure the tack of each rubber layer (rubber sheet). The obtained measurement value was represented by an index setting the value of the rubber layer 1 to 100.

### <Example 2>

### (Synthesis of flexible resin)

A maleic anhydride-modified hydrogenated styrene-ethylene-butadiene-styrene block copolymer was synthesized by a known method and pelletized. For the obtained maleic anhydride-modified hydrogenated styrene-ethylene-butadiene-styrene block copolymer, the Young's modulus at 23°C was 3 MPa, the styrene content was 20%, and the amount of maleic anhydride was 0.3 meq/g. The Young's modulus was measured in a similar manner to the above-mentioned modified EVOH.

### (Manufacturing of resin composition)

The above-mentioned modified EVOH and flexible resin were kneaded by a twin screw extruder to prepared a resin composition. Here, the content of a flexible resin in the resin composition was 20% by mass. The average particle diameter of the flexible resin in the resin composition was 1.2 µm when the obtained sample of the resin composition was frozen and then cut into a slice by using a microtome to be measured by a transmission electron microscope. Further, the Young's modulus of the resin composition at -20°C was measured in a similar manner to the measurement method of the Young's modulus of the above-mentioned modified EVOH except that the setting temperature was changed to -20°C to obtain 750 MPa.

By using the above-mentioned resin composition and thermoplastic polyurethane (TPU) (manufactured by KURARAY CO., LTD., KURAMIRON 3190), a multilayer film (film 2, TPU layer/resin composition layer/TPU layer/resin composition layer/TPU layer, thickness: 6 µm/20 µm/6 µm/20 µm/6 µm) was manufactured by using a two-kind five-layer co-extruder in the following co-extrusion molding conditions.

Extruding temperature for each resin: C1/C2/C3/die = 170/170/200/200°C

Extruder specifications for each resin:
Thermoplastic polyurethane: 25 mmϕ extruder P25-18AC (manufactured by Osaka Seiki Kosaku K.K.),
Resin composition (C): 20 mmϕ extruder laboratory machine ME type CO-EXT (manufactured by Toyo Seiki Seisaku-sho, LTD.),
T die specifications: for 500 mm width two-kind five-layer (manufactured by Research Laboratory of Plastics Technology Co., Ltd.)
Cooling roll temperature: 50°C
Withdrawing rate: 4m/min.

A tacky adhesive layer (rubber sheet) having a thickness of 500 µm obtained by thinning the rubber composition (rubber layer 1) which was used in Example 1 by a roll was arranged on each of both sides of the above-mentioned multilayer film (film 2) to manufacture an inner liner of Example 2.

### <Examples 3 to 9 and Comparative Example 1>

Inner liners of Examples 3 to 9 and Comparative Example 1 were manufactured in a similar manner to Example 1 or the like except that the type of the multilayer film, and the type and thickness of a rubber composition used for a rubber sheet arranged on both sided of the rubber sheet were changed as shown in Tables 2 and 3.

For each test inner liner, the weight thereof was measured. By using each test inner liner, a tire having a tire size of 195/65R15 was manufactured and evaluated the existence of bladder peeling (peeling of a bladder due to adhesion of an inner liner to the bladder) during tire vulcanization. Further, each test tire was mounted on a rim having a size of 6JJ to prepare a tire wheel, an air pressure of 160 kPa (relative pressure) and a tire load of 4.0kN were applied, and the tire was allowed to travel on an indoor drum tester at 80 km/h to evaluate the existence of peeling of the inner liner after the drum durability test. These results are listed on the Table 2, 3 in combination.

**[Table 2]**

| | | Example 1 | Example 2 | Example 3 | Example 4 |
|---|---|---|---|---|---|
| Rubber layer (carcass side) | Type ^{*2} | Rubber layer 1 | Rubber layer 1 | Rubber layer 1 | Rubber layer 2 |
| | Thickness (mm) | 0.05 | 0.5 | 0.05 | 0.2 |
| Multilayer film ^{*3} | | Film 1 | Film 2 | Film 1 | Film 1 |
| Rubber layer (tire inside surface side) | Type ^{*2} Type | Rubber layer 1 | Rubber layer 1 | Rubber layer 3 | Rubber layer 2 |
| | Thickness (mm) | 0.05 | 0.5 | 0.05 | 0.2 |
| Processing method of rubber layer | | Cast method | Roll | Cast method | Roll |
| Inner liner weight (g) | | 150 | 800 | 150 | 400 |
| Existence of bladder peeling during tire vulcanization | | None | None | None | None |
| Existence of inner liner peeling after travelling | | None | None | None | None |

| | | | | | |
|---|---|---|---|---|---|
| *2) see the above-mentioned Table 1 *3) film 1: seven-layer film of EVOH and TPU, film 2: five-layer film of resin composition and TPU | | | | | |

**[Table 3]**

| | | Example 5 | Example 6 | Comparative Example 1 | Example 7 | Example 8 | Example 9 |
|---|---|---|---|---|---|---|---|
| Rubber layer (carcass side) | Type ^{*2} | Rubber layer 1 | Rubber layer 5 | Rubber layer 6 | Rubber layer 1 | Rubber layer 1 | Rubber layer 5 |
| | Thickness (mm) | 0.5 | 0.05 | 0.5 | 0.05 | 0.5 | 0.05 |
| Multilayer film ^{*3} | | Film 1 | Film 1 | Film 1 | Film 1 | Film 1 | Film 1 |
| Rubber layer (tire inside surface side) | Type ^{*2} | Rubber layer 4 | Rubber layer 1 | Rubber layer 6 | Rubber layer 5 | Rubber layer 7 | Rubber layer 7 |
| | Thickness (mm) | 0.5 | 0.05 | 0.5 | 0.05 | 0.5 | 0.05 |
| Processing method of rubber layer | | Roll | Cast method | Roll | Cast method | Roll | Cast method |
| Inner liner weight (g) | | 800 | 150 | 800 | 150 | 800 | 150 |
| Existence of bladder peeling during tire vulcanization | | None | None | Yes | a little | None | None |
| Existence of inner liner peeling after travelling | | None | None | Yes | None | None | None |

As shown in the above-mentioned Table, it was confirmed that, in the inner liner of each Example, light-weight was secured and adhesion to a bladder during vulcanization was prevented and at the same time adhesiveness with an adjacent member such as a carcass was sufficiently secured, and as the result, a favorable tire durability was attained.

### DESCRIPTION OF SYMBOLS

- 1: gas barrier layer
- 2A, 2B: rubber layer
- 11: tread portion
- 12: side wall portion
- 13: bead portion
- 14: bead core
- 15: carcass
- 16: belt layer
- 17: inner liner

## Claims

1. A laminate for inner liner comprising: a gas barrier layer composed of a resin material which is comprising a thermoplastic resin or a mixture of a thermoplastic resin and a thermoplastic elastomer; and rubber layers each arranged on each of both sides of the gas barrier layer, wherein
the rubber layer contains at least a diene elastomer, the diene elastomer is modified by a compound including a functional group having an affinity for the resin material, and at least one of the rubber layers contains a cross-linking agent.

2. The laminate for inner liner according to claim 1, wherein the compound comprises any of oxygen, nitrogen, and silicon.

3. The laminate for inner liner according to claim 1, wherein the functional group is selected from an epoxy group, a maleic anhydride group, an amino group, a carboxylic acid group, and a silicon-containing functional group.

4. The laminate for inner liner according to claim 1, wherein the resin material is made of ethylene-vinyl alcohol copolymer.

5. The laminate for inner liner according to claim 1, wherein the diene elastomer contains natural rubber.

6. The laminate for inner liner according to claim 1, wherein, of the rubber layers, the layer which is positioned on the tire inside surface when the rubber layers are arranged on the tire inside surface contains a cross-linking agent.

7. The laminate for inner liner according to claim 1, wherein the rubber layers are composed of a similar rubber composition or different rubber compositions.

8. The laminate for inner liner according to claim 1, wherein tack values of the rubber layers measured by a probe tack test in accordance with JIS Z0237 are the same, or the value of the layer which is positioned on the side of the tire inside surface when arranged on the tire inside surface is smaller.

9. The laminate for inner liner according to claim 1, wherein the cross-linking agent is sulfur or peroxide.

10. The laminate for inner liner according to claim 9, wherein the cross-linking agent is sulfur.

11. The laminate for inner liner according to claim 1, wherein the thickness of each of the rubber layers is in the range of 1 to 1000 µm.

12. The laminate for inner liner according to claim 11, wherein the thickness of each of the rubber layers is in the range of 1 to 500 µm.

13. The laminate for inner liner according to claim 12, wherein the thickness of each of the rubber layers is in the range of 5 to 200 µm.

14. A tire using the laminate for inner liner according to claim 1.
